Europäisches Patentamt

European Patent Office

Office européen des brevets

(11) Publication number: **0 277 899**
**A1**

# EUROPEAN PATENT APPLICATION

(21) Application number: 88500001.8

(22) Date of filing: 04.01.88

(51) Int. Cl.⁴: **B 60 T 13/18**

(30) Priority: 05.01.87 ES 8700014
04.03.87 ES 8700593

(43) Date of publication of application:
10.08.88 Bulletin 88/32

(84) Designated Contracting States:
AT BE CH DE FR GB GR IT LI LU NL SE

(71) Applicant: **Bonet Subirana, Pere**
**Raval Cortines, 23**
**Vic (Barcelona) (ES)**

(72) Inventor: **Bonet Subirana, Pere**
**Raval Cortines, 23**
**Vic (Barcelona) (ES)**

(74) Representative: **Toro Gordillo, Ignacio Maria et al**
**Viriato, 56**
**E-28010 Madrid (ES)**

(54) **Flow regulating valve for hydraulic brakes and brake installation with said valve.**

(57) The invention concerns a flow regulating valve for hydraulic brakes, especially for vehicles, intended to actuate in combination with a pump (3) of permanent operation to which there accedes the fluid coming from a reservoir, impulsing it again under a closed circuit towards same, through a hole of outlet (5), that is closed in more or in less by the cited valve, in order to create an overpressure at the outlet of the pump (3), which is transmitted to the braking mechanisms, being said valve command from the corresponding braking drive, which controls the pressure at both sides of the compartmenting diaphragm (15) of a chamber (13, 14), to which diaphragm is solidary the shaft (9) of actuation of the closure piston (6) of the valve.

The invention also concerns a braking installation that said valve incorporates.

FIG.-1

## Description

"FLOW REGULATING VALVE FOR HYDRAULIC BRAKES AND BRAKE INSTALLATION WITH SAID VALVE"

OBJECT OF THE INVENTION.-

The present invention refers to a valve intended to carry out the flow regulation of fluid, of hydraulic brakes, in a manner that with said valve it may established at all times a level of pressure in the hydraulic brake in accordance with the braking level pursued.

The invention concerns as well to an installation of brakes for vehicles using said valve.

ANTECEDENTS OF THE INVENTION.-

As it is known, the systems of hydraulic brake are fundemented in the supply to the very braking mechanisms a hydraulic pressure that provokes the operation of same.

In vehicles of a reduced weight, and with systems of hydraulic braking of minimum provisions, a simple cylinder is used, which piston is directly actuated by the user by means of the brake pedal, so that the movement of said piston provokes a pressure at the chamber of the cylinder, which is transmitted, through the corresponding connecting lashes, to the very braking system.

In heavier vehicles, it obviously becomes necessary a greater pressure of fluid in the braking mechanisms, for which the previously cited system does not result valid, as the pressure to be exerted on the brake pedal would result, in many cases, above the physical possibilities of the user, for which one appeals to the commonly called "servobrakes", in which the very energy of the vehicle is used to actuate the braking mechanisms, the brake pedal acting as a mere element of control of the energy applied to said braking mechanisms.

This solution, perfectly valid at the level of relatively small vehicles, does not offer the adequate provisions when dealing with vehicles of a great weight, like, for instance, trucks and other loading vehicles, as demonstrated by the fact that in this scope, the most commonly used practical solution moves through fully different ranges, concretely, by using electric brakes, with a fully different conception and functionality.

DESCRIPTION OF THE INVENTION.-

The flow regulating valve for hydraulic brakes that the invention proposes, allows the use of systems of hydraulic braking in vehicles of a great tonnage, with a perfect reliability, functionality and maneuverability.

Therefor, and in a more concrete mode, we start from the use of a pump that, taking oil coming from a supplier reservoir, makes it circulate on a closed circuit, returning again to said reservoir under situation of inoperance for the brake, said pump, besides, being obviously communicated with the brake mechanism, to which it does not affect under such a situation, thanks to the existence of the regulating valve that is preconized, which in the repeatedly cited situation, allows the free return of the fluid to the reservoir of origin, without creating an over-pressure in the braking mechanisms. This cited pump is permanently actuated by the traction elements of the vehicle, with a practically void energetic consumption, under an inoperative situation of the braking system, as the movement of the oil is made practically in the absence of any resistance to that effect.

On the contrary, and during the braking, the valve preconized closes, in more or in less, the hole of return of the oil towards the supplier reservoir and, in consequence, this closure, as the flow supplied by the pump tends to keep constant, originates an over-pressure in the braking mechanisms, with the consequent braking effect, which braking is adjustable according to the more or the less closure established by the valve at said outlet of return for the oil, it being obvious, in consequence, that when the closure of said valve be total, all the pressure which the pump is capable to generate, will be supplied to the braking system and, in consequence, the braking will result maximal.

In a more concrete mode, the valve preconized incorporates a cylindrical chamber, to which the fluid impulsion pump is coupled, it being established at said cylindrical chamber, the hole of return of oil to the reservoir of feed of said pump, being housed besides, at said chamber, a piston which, under inoperative situation of the braking system, lets fully free the cited hole of return for the oil.

The cited piston is axially movable, closing in more or in less the cited hole, through a shaft that tightly crosses the closed base of the cylindrical chamber opposite to that of coupling to the pump, and which penetrates in the sine of a drum, physically solidarized to the cited cylindrical chamber, at which drum it is established in the medium level, a membrane of diaphragm to which the cited shaft is centeredly solidary, tending said shaft, and in consequence, the piston, to be projected towards the closure situation by effect of a spring established in the cylindrical chamber defined in the drum by the diaphragm opposed to that of location of the shaft, but being counteracted the stress of said spring by the existence of pressure air at the other chamber, that is, at the chamber in which the shaft houses and operates.

The spring containing chamber is at environmental pressure, to which purpose it will be duly communicated with the outside, whilst in the lower pressurized chamber it is established a conduit, assisted by the corresponding drive, which allows the introduction of pressure air at said chamber or outlet of same, in a manner that when at said chamber there exists pressure air, the effects of the spring are cancelled and the piston of the valve occupies the inoperative situation of maximum retraction, whilst when the lower chamber of the drum loses its pressure, the spring established in the other chamber comes to be inoperative and provokes the movement of the piston, up to a situation of partial or total closure, which will be variable according to the level of pressure that is kept at the chamber of the drum opposite to that of location of the spring.

In order that the pressure of the fluid generated by the pump does not constitute an obstacle for the axial movement of the piston, it has been provided for it to incorporate an also axial hole which extends until the beginning of the shaft and which opens at said shaft to establish communication between the two bases of the piston, so that the pressure existing in the lower face of same is also transmitted to its upper face, with the same amplitude, in consequence, the pressure generated by the pump does not affect the movement in one sense or another of the repeatedly cited piston.

In accordance with the structuration described, under the inoperative situation of the braking system, at the chamber of the drum alien to that of location of the spring there will exist pressure air which will act against said spring, tending the diaphragm to move against said spring and to that, in consequence, the piston keeps in a retraction situation in which it lets fully free the radial hole established at the cylindrical chamber, for return of the oil impulsed by the pump to the feeding reservoir of same. When on acting over the corresponding drive, the air pressure at the corresponding chamber of the drum is reduced, the piston advances in its cylindrical chamber towards the pump, in a magnitude in accordance with the cited pressure fall, provoking a closure in more or in less of the oil return hole towards the feeding reservoir of the pump, which means a strangling at said outlet which will give rise to an overpressure in the communication of fluid between said pump and the braking system, with the corresponding activation of the latter, which intensity of braking will be as great as the pressure fall in the corresponding chamber of the drum, until a limit situation, corresponding to that of maximal brak ing, in which the pressure fall at the drum will be total and, in consequence, the piston will fully close the radial hole of oil return to the feeding reservoir of the pump.

Optionally, especially according to the tonnage of the vehicle, to which the flow regulating valve be applied for its hydraulic brake, it may be the lower chamber of the drum the one permanently communicated with the atmosphere, it being at the upper chamber, the one bearing the spring, where it is established the corresponding inlet/outlet of air, assisted by the corresponding drive, in which case at said chamber what will usually be kept will be a depression, to work against the spring, which depression will be cancelled partially or fully during the braking.

The invention also concerns a braking installation in which said regulating valve participates, and in which are used said hydraulic pumps as means of generation of the braking pressure, attaining at said installation a perfect control or functional regulation of such pumps, keeping them all a permanent situation of equilibrium.

Therefor and in a more concrete mode, the installation comprises a first pump, controlled by a valve like the one previously described, and a second hydraulic pump being connected to this first pump, concretely connecting the inlet of aspiration of the second pump to the outlet of pressure of the first one and these hydraulic pumps being established at a hydraulic circuit provided with the corresponding fluid supplying reservoir, and the also corresponding radiator.

Complementarily, between said pumps it is established a bypass valve, controlled by the main valve, to which purpose both valves are related through the corresponding circuit.

In a more concrete mode, when the main or regulation valve is under the closed situation, under which situation the first pump supplies the corresponding pressure to the braking mechanisms, the overpressure originated in the sine of said main valve is transmitted to the bypass valve, through the corresponding conduit, provoking the closure of same, with which this second pump also transmits its pressure to the braking mechanisms, whilst when the main valve opens and the pressure disappears as the fluid freely returns to the reservoir, under a closed circuit, the very pressure fall existing at said main valve determines the automatic opening of the bypass valve associated to the second pump, for which it is produced the simultaneous pressure fall at the latter and a simple recycling of the oil without transmission of pressure to the braking mechanisms.

From the foregoing, it is understood that by means of this structuration, the two pumps which participate in the braking installation and in its case, the total of the pumps which participate at said installation, actuate in a synchronized mode, with a perfect equilibrium of pressure, and with a perfect braking regulation during its actuation.

DESCRIPTION OF THE DRAWINGS.-

To complement the description that is being made, and in order to help to a better understanding of the characteristics of the invention, it is enclosed to the present specification, as an integral part of same, a set of drawings in which, with an illustrative and non limitative character, the following has been represented:

Figure 1.- Shows schematically, on a sectional side elevation view, a flow regulating valve for hydraulic brakes, made in accordance with the object of the present invention.

Figure 2.- Shows, finally, a schematic representation, of a brakes installation for vehicles, in which there participates the valve of the previous figure, and also made in accordance with the object of the invention.

PREFERENT EMBODIMENT OF THE INVENTION.-

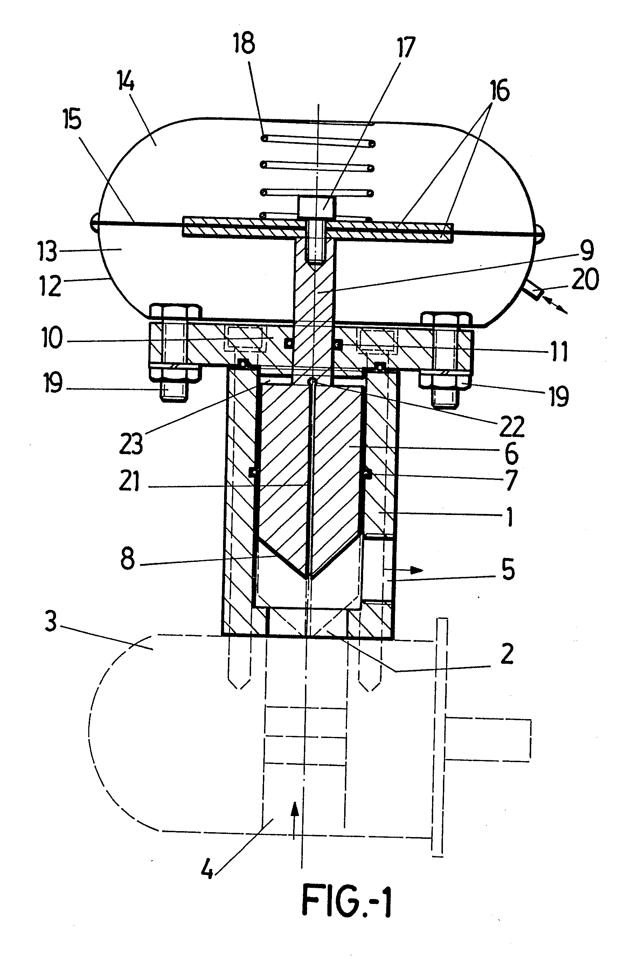

On view of figure 1 it can be seen how the flow regulating valve that is preconized is constituted as from a cylindrical chamber 1, which by one of its ends, concretely by its open end, 2, is coupled and fastened tightly to a pump 3, which is kept permanently in operation, when the vehicle so does, actuated by the very means of traction of the latter, to which pump the fluid goes, in concrete the oil, through an inlet 4, coming from a feeding reservoir, which fluid is impulsed towards the inside of the chamber 1 and which returns normally to said reservoir through a radial hole 5 established at the wall of the chamber 1, at the proximities of its outlet 2, which hole relates said chamber with the reservoir by means of the adequate conduit, in which it will be established preferently a radiator for the due cooling of the fluid.

At the inside of the cylindrical chamber 1 operates a piston 6, duly tight, with respect to said chamber, with the cooperation of the joint 7, which piston presents a conical front 8 and which, under normal conditions, that is, when the brake is not actuated, is located beyond the hole 5 of outlet for the oil, allowing the free outlet of same.

This piston 6 meets solidly by its extremity opposed, a shaft 9, axial extension of same, which crosses the closed base 10 of the cylindrical chamber, duly tightened with the cooperation of the joint 11, to accede to the sine of a drum 12, in which two chambers 13 and 14 are established, with the cooperation of a membrane or intermediate diaphragm 15, to which membrane is fastened the cited shaft 9, with the cooperation of two discs 16 and a blocking screw 17, said shaft 9 remaining located at the chamber 13, whilst at the chamber 14 of the drum is located a spring 18 which tends to reinforce the diaphragm 15 in the sense of projection of the shaft towards the inside of the cylindrical chamber 1, and, in consequence, in the sense of axial movement of the piston 6 towards the situation represented in the figure with discontinuous lines, of closure of the hole 5 of outlet for the oil.

The drum 12, as also noted in the figure, is physically joined to the base 10 of the cylindrical chamber 1, through the screws 19.

The chamber 14 in which it is established the spring 18, is permanently communicated with the atmosphere, and therefore, at environmental pressure, whilst the chamber 13 incorporates an inlet/outlet 20 of air, assisted by the corresponding drive, there existing under inoperative situation of the whole, pressure air at the chamber 13, which cancels the effect of the spring 14 and which tends to keep the piston 6 in the inoperative situation and represented under continuous lines in figure 6.

In order to activate the braking mechanisms, it is enough with reducing the pressure existing at the chamber 13, acting on the drive 20, so that the piston 6 moves, closing, in more or in less, the hole 5 of outlet of oil, which closure gives rise to an overpressure at the outlet of the pump, which is communicated to the braking mechanisms, with the consequent activation of same, in a magnitude proportional to this overpressure of the fluid at the outlet of the pump and, consequently, proportional to the level of closure of the hole 5 of return of the oil towards the feeding reservoir of the pump.

In order that the very pressure of oil at the outlet of the pump 3 does not interfere with the normal movement of the piston 6, it has been provided for it to incorporate an axial hole 21, which is opened in 22, after exceeding said piston, establishing communication between the front 8 of same and a chamber 23 defined between the cited piston 6 and the closed base 10 of the cylindrical chamber 1, so that through this hole 21-22, the pressures between the two ends of the piston are freed, and same is only affected by the push in one sense or the other of the shaft 9.

There also exists the possibility, as previously said, that it is the chamber 13 the one communicated directly with the atmosphere, being it established the drive 20 in the chamber 14 of the drum, in which case, what is supplied to said chamber is a depression counteracting the effects of the spring 18.

In any case, as from the stable situation represented in the figure, in which the actuation of the pump results inoperative regarding the braking system, because the oil returns freely, under a closed circuit, through the hole 5, when one actuates on the drive 20 to reduce the pressure of the chamber 13, or in its case, the depression of the chamber 14, the spring 18 pushes the shaft 9 and the latter forces the piston 6 to move at the cylindrical chamber 1, in an amplitude in accordance with said reduction of pressure, so that said piston will close in more or in less the hole 5 of outlet of the oil, and such a closure will create, in turn, an overpressure, proportionally variable, at the outlet of the pump, which overpressure will be transmitted to the braking system and that, in consequence, will actuate over these latter also in a magnitude proportional to the actuation on the drive 20.

Obviously, when it is pretended a sudden braking at the chamber 13, the pressure will be fully eliminated, so that the piston 6 moves towards the situation of total closure for the hole 5 represented in discontinuous lines in the figure, whilst when it is pretended to attain a soft and permanent braking effect, like for instance, in the descent of a slope, the piston will be kept at an intermediate level of closure for the hole 5, which will give rise to an also intermediate pressure over the braking system, in accordance with the specific requirements of the case.

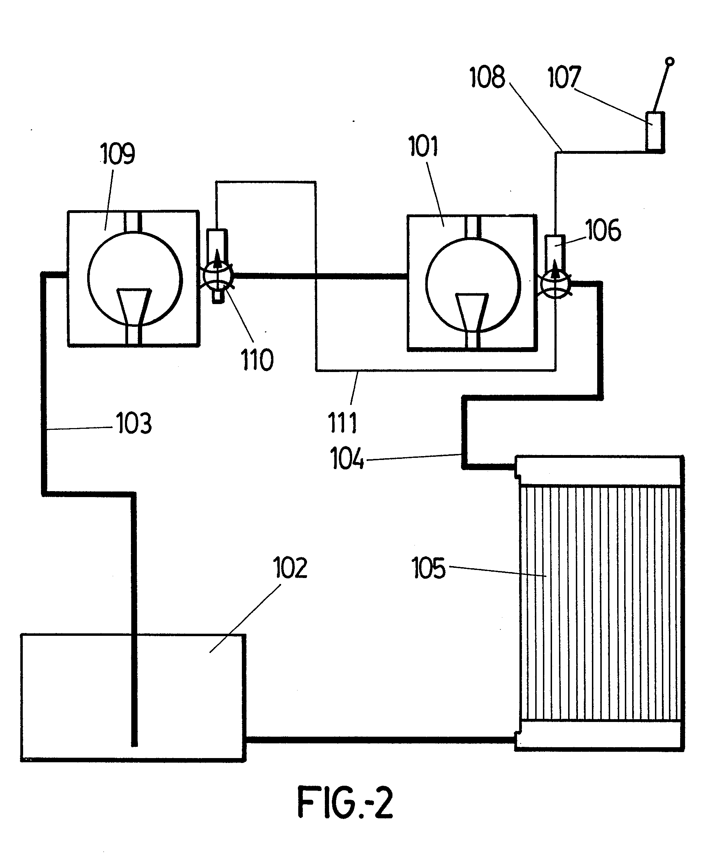

In accordance with the structuration described for this flow regulating valve and with the representation of figure 2, in a braking installation for vehicles, also made in accordance with the object of the invention, there participates a main pump 101, equivalent to the pump 3 of figure 1, permanently in operation at the expense of the very motor of the vehicle at which the braking system is established, when said motor is, at the same time, in operation, which pump receives the oil from a reservoir 102, through a conduit 103, and which under inoperative situation for the braking system, returns the oil to said reservoir 102, under a closed circuit, through the conduit 104, in which it is established the classical radiator 105, to which purpose, at the outlet of the pump 101 is located a valve 106, with the characteristics of the flow regulating valve previously described and shown in figure 1, which valve, under such inoperative situation of the braking system, will be open and which closing through the actuation on the drive 107, related with the valve through the conduit 108, will provoke an interruption in the closed circuit 102-103-104-102, with which at the chamber of the main pump 101, an overpressure will be originated which will be supplied to the braking mechanisms.

As a complement to this basic structuration, at the conduit 103 is placed a second hydraulic pump 109, if procedent several pumps, also capable to supply a pressure to the braking mechanisms, pump 109 with which cooperates a bypass valve 110, so that said pump 109, will result effective when the cited valve 110, located at the outlet of same, is found under the closed situation, the previously cited closed circuit being interrupted, whilst in the situation of opening for the valves 106 and 110, the fluid will circulate freely through said circuit without the corresponding pumps, in spite of being found under the situation of permanent operation, supplying pressure to the braking mechanisms.

The bypass valve 110 consists in a mere closing piston, which permanently tends to the situation of opening by effect of a spring or similar means and is commanded by the very regulation valve 106, to which effect both valves are related directly by an auxiliary conduit 111 which transmits the possible overpressure existing at the main valve 106 to the piston of the bypass valve 110, provoking the closure of same.

In accordance with the contents of the previous paragraph, when the main valve 106 is found under the opening situation, and the fluid freely returns to the reservoir 102, impulsed by the pump 101, there will not exist pressure at the sine of said valve 106, for which pressure will be neither transmitted to the auxiliary valve 110, which and due to its very trend, will also be made in the opening position, whilst when acting on the drive 107, it is closed in more or in less the main valve 106, in same it will also be generated a variable pressure that, with the same magnitude, will be transmitted to the auxiliary valve 110, creating in it a closure equivalent, also partial or total, determining in turn a pressure level corresponding in the sine of the auxiliary pump 9, attaining this way a perfect synchronism between both pumps, on which refers to their incidence over the braking mechanisms, which synchronism is derived from the permanent equilibrium of pressures existing at the sine of both pumps.

In summary, before any manipulation on the drive 107 which may determine a level of closure in the main valve 106, which is to originate in turn a pressure level at the main pump 101 transmitted to the braking mechanisms, it is produced a simultaneous effect at the auxiliary pump or pumps 109, with a perfect equilibrium of pressures, thus attaining a functionality for the braking installation in its whole, similar to that which would be obtained with the use of a unique pump, but obviously with a greater braking pressure.

## Claims

1.- Flow regulating valve for hydraulic brakes, based in the use of a pump that is kept permanently in operation actuated by the traction means of the vehicle, which pump receives the fluid from a feeding reservoir and that, communicated with the braking system, causes said oil to return to the cited reservoir through a closed circuit conduit, having said valve the purpose of closing in more or in less the hole of outlet towards the conduit of return of oil to the reservoir, which closure determines an overpressure at the outlet of the pump which is communicated to the braking system, essentially characterized in that it is established as from a cylindrical chamber that is coupled by one of its open ends to the cited pump of impulsion of fluid, it being established at the beginning of said chamber and radially the hole of return for the fluid, and being it established besides at the sine of said chamber a piston which, under inoperative situation, lets fully free the cited outlet hole, which piston is movable at the sine of the cited chamber to close in more or in less said hole, having it been provided that such a piston be solidary through its opposite end, with a shaft that tightly crosses the closed base of the cylindrical chamber and which penetrates in the sine of a drum in which it is in turn established a membrane or intermediate diaphragm, determining at said drum two independent chambers, being the cited shaft solidary to said membrane, and located at one of the chambers defined in the drum through same, whilst at the other chamber a spring is located, with the particularity that the chamber that contains the spring is under environmental pressure, whilst at the chamber in which the shaft operates, it is established a drive for the inlet and outlet of air to same, in a way that at this latter, under inoperative situation for the braking system, there exists an overpressure that cancels the effects of the spring and which forces the piston to keep fully dephased with respect to the hole of return of oil to the feeding reservoir of the pump, whilst when on acting on the cited drive, the pressure falls in the cited chamber of the drum, the spring acts by moving the piston towards a situation of more or less closure of the hole of outlet of oil, according to the fall of pressure produced at said chamber.

2.- Flow regulating valve for hydraulic brakes, as per claim 1, characterized in that optionally, it is the chamber of the drum where the shaft associated to the piston operates, which is found permanently under atmospheric pressure, whilst at the chamber that contains the spring it is established an inlet/outlet of air, assisted by the corresponding drive, in which case, to said chamber it is supplied or eliminated a depression that counteracts as well the effects of the spring.

3.- Flow regulating valve for hydraulic brakes, as per the previous claims, characterized in that, in order that the pressure of the fluid at the outlet of the pump does not affect the axial movement of the piston, it has been provided for it to incorporate an axial hole which is opened when reaching its opposite end and which puts in communication the front of said piston orientated towards the pump with a chamber established between its opposite end and the closed base of the cylindrical chamber, in order that the pressure of fluid generated by the pump acts simultaneously and balancedly on the two ends of the piston, both pressures being counteracted, and said piston being only affected by the pushing made on same by the spring established at the drum.

4.- Brakes installation, in which there exists a fluid supply reservoir, and the corresponding radiator, and at which circuit is established, besides, a flow regulating valve, as per the contents of the previous claims, controlled from the brake drive which causes a partial or total strangling in the circuit, determining an adjustable pressure at the cited main pump, which pressure is supplied to the brake mechanisms, essentially characterized in that in the cited hydraulic circuit it is established, besides, at least another hydraulic pump similar to the previous one, also capable to supply a pressure to the brake mechanisms when the cited hydraulic circuit is interrupted at the outlet of said pump, having it been provided that at said outlet a bypass valve be located, structured in a way that its closing piston tends to the situation of opening permanently, and with the particularity that said piston is driven up to the situation of closure by the very main or regulation valve, to which purpose both valves are communicated through an auxiliary conduit, all of it in a way that the pressure generated at the sine of the main valve, by partial or total closure of same, is supplied to the piston of the auxiliary or bypass valve, it being produced a total or partial closure of the latter, with a perfect valve synchronism, and with an equilibrium of pressures between the pumps that participate in the installation, under any operative situation of same.

5.- FLOW REGULATING VALVE FOR HYDRAULIC BRAKES AND BRAKING INSTALLATION WITH SAID VALVE.

0277899

FIG.-1

FIG.-2

| | DOCUMENTS CONSIDERED TO BE RELEVANT | | EP 88500001.8 |
|---|---|---|---|
| Category | Citation of document with indication, where appropriate, of relevant passages | Relevant to claim | CLASSIFICATION OF THE APPLICATION (Int. Cl.4) |
| Y | FR - A1 - 2 256 854 (FERODO) <br> * Fig. 1,2,3 * <br> -- | 1 | B· 60 T 13/18 |
| Y | CH - A5 - 615 006 (MEILLER) <br> * Fig. 3,4,5,6 * <br> -- | 1 | |
| A | DE - B2 - 2 101 641 (FIAT) <br> * Fig. 1,2 * <br> -- | 1 | |
| A | US - A - 4 120 480 (ANDO) <br> * Fig. 7c,8a * <br> -- | 1,2 | |
| A | DE - B2 - 2 757 757 (AISIN) <br> * Fig. 1,3 * <br> -- | | TECHNICAL FIELDS SEARCHED (Int. Cl.4) |
| A | DE - B2 - 2 360 133 (MIDLAND) <br> * Fig. 1,2 * <br> ---- | | B 60 T |

The present search report has been drawn up for all claims

| Place of search | Date of completion of the search | Examiner |
|---|---|---|
| VIENNA | 07-04-1988 | PANGRATZ |